Europäisches Patentamt

European Patent Office

Office européen des brevets

(19)

(11) **EP 1 168 305 A2**

(12) **EUROPÄISCHE PATENTANMELDUNG**

(43) Veröffentlichungstag:
  **02.01.2002 Patentblatt 2002/01**

(51) Int Cl.⁷: **G10L 15/26**, G10L 15/02

(21) Anmeldenummer: **01107211.3**

(22) Anmeldetag: **23.03.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **19.06.2000 DE 10030105**

(71) Anmelder: **ROBERT BOSCH GMBH**
  **70442 Stuttgart (DE)**

(72) Erfinder:
  • **Euler, Stephan**
    **64291 Darmstadt (DE)**
  • **Korthauer, Andreas**
    **70499 Stuttgart (DE)**

(54) **Verfahren zur mehrkanaligen Merkmalextraktion für die Spracherkennung**

(57) Die Erfindung bezieht sich auf eine Spracherkennungseinrichtung, bei der mindestens zwei Eingangssignale $[y_1(k) ... y_N(k)]$ über jeweilige getrennte Kanäle parallel einer Erkennungseinrichtung mit einer Merkmalsextraktionseinrichtung zum Bilden von Merkmalvektoren, mit einer Transformationseinrichtung zum Bilden transformierter Merkmalvektoren $[O^t(l)]$ und mit einem nachfolgenden Klassifikator (KL) zugeführt werden, der eine Klassifikation der zugeführten transformierten Merkmalvektoren $[O^t(l)]$ trifft und den ermittelten Klassen entsprechende Ausgangssignale abgibt. Eine hohe Erkennungsrate bei relativ geringem Aufwand des Aufbaus und der Verarbeitung werden dadurch erreicht, dass die Merkmalsextraktionseinrichtung in den einzelnen Kanälen getrennt angeordnete Merkmalsextraktionsstufen (ME1 ... MEk) aufweist, die mit ihren Ausgängen an die gemeinsame Transformationseinrichtung (T) angeschlossen sind (Fig. 1).

Fig.1

**Beschreibung**

Die Erfindung bezieht sich auf eine Spracherkennungseinrichtung, bei der mindestens zwei Eingangssignale über jeweilige getrennte Kanäle parallel einer Erkennungseinrichtung mit einer Merkmalsextraktionseinrichtung zum Bilden von Merkmalvektoren, mit einer Transformationseinrichtung zum Bilden transformierter Merkmalvektoren und mit einem nachfolgenden Klassifikator zugeführt werden, der eine Klassifikation der zugeführten transformierten Merkmalvektoren trifft und den ermittelten Klassen entsprechende Ausgangssignale abgibt.

In modernen Systemen zur automatischen Spracherkennung wird oftmals durch eine lineare Transformation extrahierter Merkmale versucht, die Erkennungsleistung eines zugrundeliegenden Klassifikators zu verbessern. Die Transformation wird so gewählt, dass zum einen eine Dimensionsreduktion des Merkmalraumes stattfindet, aber zum anderen möglichst viel klassentrennende Information erhalten bleibt. Vielfach wird für diese Aufgabe die lineare Diskriminanzanalyse verwendet, wie z.B. in R. Haeb-Umbach, H. Ney,: Linear Discriminant Analysis for Improved Large Vocabulary Continuos Speech Recognition. In: Proceedings of the International Conference on Acoustics, Speech & Signal Processing (ICASSP). I. 1992, S. 13-16; M. Finke, P. Geutner, H. Hild, T. Kemp, K. Ries, M. Westphal: The Karlsruhe-Verbmobil Speech Recognition Engine. In: Proceedings of the International Conference on Acoustics, Speech & Signal Processing (ICASSP). I. 1997, S. 83-86 sowie G. Ruske, R. Falthauser, T. Pfau: Extended Linear Discriminant Analysis (EL-DA) for Speech Recognition. In: Proceedings of the International Conference on Speech and Language Processing (ICSLP). 1998 näher ausgeführt ist.

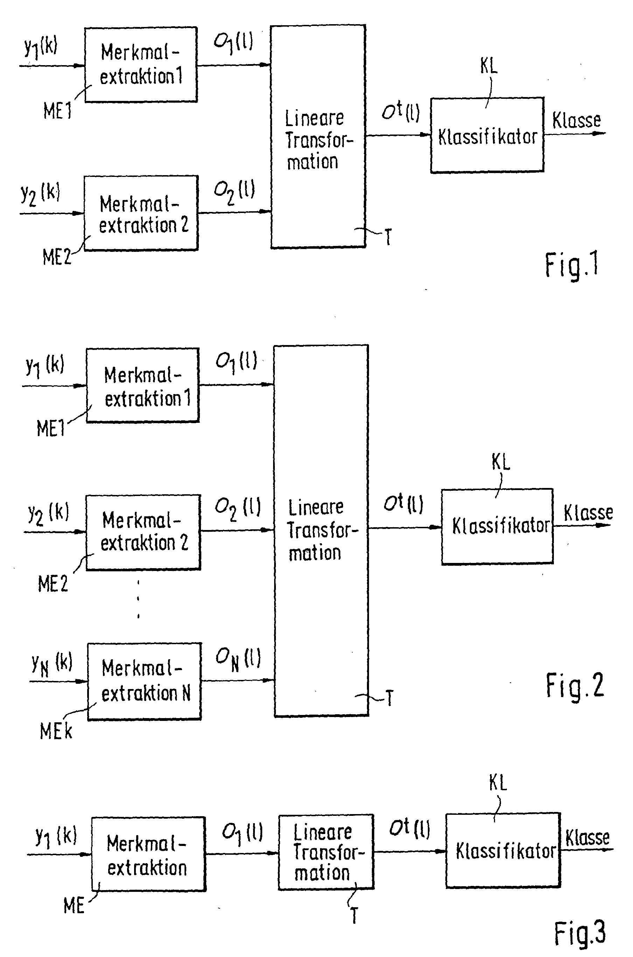

Bekannt ist dabei eine Reduktion eines zusammengesetzen Merkmalvektors von meist 39 auf 32 Komponenten. Der ursprüngliche Merkmalvektor wird dabei aus der Kurzzeitleistung des Signals, 12 Mel-Frequenz-Cepstral-Koeffizienten (MFCC), wie in S. B. Davis, P. Mermelstein: Comparison of Parametric Representation for Monosyllabic Word Recognition in Continiously Spoken Sentences. IEEE Transactions on Acoustics, Speech, and Signal Processing ASSP-28 (1980), S. 357-366 angegeben, und deren erster und zweiter zeitlicher Ableitung gebildet. Die Merkmalextraktion arbeitet in diesem Fall mit einem einzigen Eingangssignal. Typischerweise werden die Merkmale für Signalblöcke mit einer Länge von etwa 20 ms berechnet. Dies geschieht in einem reduzierten Zeittakt etwa alle 10 ms. Eine solche Verarbeitungskette ist in Fig. 3 dargestellt. Der Index k bezeichnet dabei einen hohen Zeittakt eines digitalisierten Sprachsignals, während der Index I einen reduzierten Zeittakt der Merkmalvektoren darstellt. Die nachfolgende Klassifikation verwendet zur Unterscheidung einzelner Klassen sogenannte Verborgene Markov-Modelle oder einen Mustervergleich mit dynamischer Zeitanpassung. Auch werden künstliche neuronale Netze zur Klassifikation verwendet. Diese Klassifikatoren müssen anhand von Beispieldaten in einer Trainingsphase an die Klassifikationsaufgabe angepasst werden.

Stehen andererseits mehrere Eingangssignale zur Verfügung, werden diese meist mittels eines Verfahrens zur mehrkanaligen Störgeräuschreduktion zu einem einzigen störgeräuschreduzierten Signal zusammengeführt, so dass die Merkmalextraktionseinrichtung der Spracherkennungseinrichtung selbst wiederum lediglich nur ein ihr zugeführtes Eingangssignal verarbeiten muss. Die verwendeten Verfahren zur Störgeräuschreduktion nutzen dabei die Korrelation zwischen den Signalen, wie in J. Allen, D. Berkley, J. Blauert: Multimicrophone signal-processing technique to remove room reverberation from speech signals. Journal of the Acoustical Society of America 62 (1977), Nr. 4, S. 912-915 und M. Dörbecker, S. Ernst: Combination of Two-Channel Spectral Subtraction and Adaptive Wiener Post-Filtering for Noise Reduction and Dereverberation. In: Proceedings of EUSIPCO. 2. 1996, S. 995-998 angegeben, oder die Richtwirkung sogenannter Mikrofon-Arrays aus, wie in M. Dörbecker: Small Microphone Arrays with Optimized Directivity for Speech Enhancement. In: Proceedings of the European Conference on Speech Communication and Technology (EUROSPEECH). 1. 1997, S. 327-330 und J. Bitzer, K. U. Simmer, K.-D. Kammeyer: Multi-Microphone Noise Reduction Techniques for Hands-Free Speech Recognition - A Comparative Study. In: Proceedings of the Workshop on Robust Methods for Speech Recognition in Adverse Conditions. 1999, S. 171-174 angegeben. Diese Verfahren arbeiten entweder im Frequenzbereich mit etwa 128 bis 512 Frequenzbändern oder mit einer Filterung der Eingangssignale im Zeitbereich. Diese Ansätze erfordern eine hohe Rechenleistung, insbesondere bei Echtzeitimplementierung, da zur Verrechnung große Datenmengen anfallen. Die Reduktion auf wenige Merkmale erfolgt erst nach der Kombination der Eingangssignale.

Der Erfindung liegt die Aufgabe zugrunde, eine Spracherkennungseinrichtung bereitzustellen, die bei möglichst hoher Erkennungsrate einen möglichst geringen Aufwand hinsichtlich des Aufbaus und der Verarbeitungsleistung erfordert.

Diese Aufgabe wird mit den Merkmalen des Anspruchs 1 gelöst. Hiernach ist vorgesehen, dass die Merkmalsextraktionseinrichtung in den einzelnen Kanälen getrennt angeordnete Merkmalsextraktionsstufen aufweist, die mit ihren Ausgängen an die gemeinsame Transformationseinrichtung angeschlossen ist.

Mit diesem Aufbau der Spracherkennungseinrichtung und der damit verwirklichten Vorgehensweise werden die Eingangssignale in den einzelnen Kanälen direkt der Merkmalextraktion unterzogen, wobei aus den Eingangssignalen möglichst viel Infomation für den Erkennungsprozess in den extrahierten Merkmalvektor einfließen soll. Die Kombination der Kanäle findet erst im Merkmalraum statt, wobei aus den Merkmalvektoren der einzelnen Kanäle ein einziger transformierter Merkmalvektor berechnet wird. Die Merkmalvektoren werden also unabhängig voneinander aus den Eingangssignalen berechnet und mittels einer Transformation zu einem gemeinsamen Merkmalvektor kombiniert.

Während des Betriebs der Spracherkennungseinrichtung erfolgt die Kombination der Merkmalvektoren durch eine einfache zeitinvariante Matrixoperation. Dies führt gegenüber dem bekannten adaptiven Verfahren der mehrkanaligen Störgeräuschreduktion zu einer deutlichen Reduzierung des Rechenaufwandes. Zum einen ist für das entwickelte Verfahren keine Adaption im laufenden Betrieb notwendig, zum anderen erfolgt die Reduktion auf wenige Merkmale und auf einen reduzierten Zeittakt bereits vor der Kombination der Kanäle.

Es hat sich überraschend gezeigt, dass beim Trainieren der Spracherkennungseinrichtung unter den Bedingungen einer vorgesehenen Betriebssituation ohne Störgeräuschreduktion einerseits und dem Einsatz der Spracherkennungseinrichtung in der entsprechenden realen Situation ebenfalls ohne Störgeräuschreduktion andererseits sich sogar eine höhere Erkennungsrate ergibt als mit Störgeräuschreduktion beim Training und realen Einsatz. Soll aus irgendwelchen Gründen doch eine Störgeräuschreduktion beim Training und beim realen Einsatz vorgenommen werden, so kann diese ohne großen Zusatzaufwand vor der Merkmalextraktion in einzelnen Kanälen, also pro Kanal relativ einfach vorgenommen werden.

Eine vorteilhafte Ausgestaltung der Spracherkennungseinrichtung besteht darin, dass die Transformationseinrichtung eine lineare Transformationseinrichtung ist. Geeignete Maßnahmen bestehen dabei darin, dass die Transformationseinrichtung zum Durchführen einer linearen Diskriminanzanalyse (LDA) oder einer Karhunen-Loève-Transformation ausgebildet ist.

Diese Wahl der Transformationseinrichtung bei der Entwicklung des Spracherkenners führt dazu, dass möglichst viel Information zur Unterscheidung der verschiedenen Klassen erhalten bleibt. Beim Einsatz der linearen Diskriminanzanalyse oder der Karhunen-Loève-Transformation sind Beispieldaten für den Aufbau der Transformationseinrichtung notwendig. Günstig ist die Verwendung derselben Daten, die zum Aufbau des Klassifikators verwendet sind.

Es gibt auch Erweiterungen der LDA, die hier eingesetzt werden können. Außerdem ist es denkbar, nichtlineare Transformationseinrichtungen zu wählen (z.B. sogenannte "neuronale Netze"). Gemeinsam ist diesen Verfahren, dass sie Beispieldaten für den Aufbau benötigen.

Die Erkennungsrate wird weiterhin dadurch unterstützt, dass der Klassifikator unter Bedingungen trainiert ist, die einer vorgesehenen Einsatzsituation entsprechen.

Die Erfindung wird nachfolgend unter Bezugnahme auf die Zeichnungen näher erläutert. Es zeigen:

Fig. 1    ein Blockschaltbild für eine zweikanalige Spracherkennungseinrichtung,

Fig. 2    ein Blockschaltbild für eine mehrkanalige Spracherkennungseinrichtung und

Fig. 3    eine einkanalige Spracherkennungseinrichtung nach dem Stand der Technik.

Fig. 1 zeigt ein Blockschaltbild einer entwickelten Spracherkennungseinrichtung bzw. eines entsprechenden Verfahrens in zweikanaliger Ausführung, das heißt mit zwei Eingangssignalen $y_1$ und $y_2$. Merkmalvektoren $O_1$ und $O_2$ werden aus den Eingangssignalen $y_1$ und $y_2$ mittels bekannter Verfahren der Merkmalextraktion, z.B. MFCC, getrennt pro Kanal gewonnen. Aus der Folge dieser Merkmalvektoren wird durch eine vorzugsweise lineare Operation eine neue Folge transformierter Merkmalvektoren gebildet nach der Beziehung

$$O^t(l) = T \cdot \begin{bmatrix} O_1(l) \\ O_2(l) \end{bmatrix} \qquad (1)$$

Die Matrixoperation wird für jeden Signalblock in einem reduzierten Zeittakt I durchgeführt. Die Dimension der Matrix T wird entsprechend gewählt, um eine Dimensionsreduktion zu erbringen. Besitzen die Merkmalvektoren $U_1$ und $U_2$ jeweils $n_1$ bzw. $n_2$ Komponenten und soll der transformierte Merkmalvektor lediglich $n_t$ Koeffizienten umfassen, so muss die Matrix T die Dimension $n_t$ mal $(n_1 + n_2)$ besitzen. Ein typisches Zahlenbeispiel ist $n_1 = 39$, $n_2 = 39$ und $n_t = 32$. Dann hat die Transformationsmatrix T die Dimension 32•78, und die Transformation erbringt eine Dimensionsreduktion von insgesamt 78 Komponenten in den Merkmalvektoren $O_1$ und $O_2$ auf 32 Komponenten im transformierten Merkmalvektor $O^t$.

Die Transformationsmatrix T wird anhand von Beispieldaten so eingestellt, dass der transformierte Merkmalvektor $O^t$ die maximale Information zur Unterscheidung der einzelnen Klassen besitzt. Dazu können die bekannten Verfahren der linearen Diskriminanzanalyse oder der Karhunen-Loève-Transformation verwendet werden. Zum Training des Klassifikators KL werden die transformierten Merkmalvektoren $O^t(I)$ verwendet.

Als Erweiterung des Verfahrens können, wie in Fig. 2 dargestellt, auch mehr als zwei Kanäle miteinander kombiniert werden. Gleichung 1 geht dann über in

$$O^t(l) = T \cdot \begin{bmatrix} O_1(l) \\ \vdots \\ O_N(l) \end{bmatrix} \qquad (2)$$

Die Dimension der Transformationsmatrix ist dann

$$n_t \times \left( \sum_{i=1}^{N} n_i \right)$$

, wobei $n_i$ die Anzahl der Komponenten in dem Merkmalvektor $O_i$ angibt.

Die in den Fig. 1 und 2 angegebenen Blöcke ME1, ME2, MEk der den jeweiligen Kanälen zugeordneten Merkmalsextraktionsstufen, die zusammen die Merkmalsextraktionseinrichtung bilden, müssen nicht notwendigerweise für alle Eingangssignale $y_1$, $y_2$ bzw. $y_N$ gleich sein. Als Alternative kommen z.B. Merkmale in Betracht, die auf der sogenannten linearen Prädiktion beruhen, die in der Sprachkodierung ebenfalls Anwendung findet.

**Patentansprüche**

1. Spracherkennungseinrichtung, bei der mindestens zwei Eingangssignale $[y_1(k) ... y_N(k)]$ über jeweilige getrennte Kanäle parallel einer Erkennungseinrichtung mit einer Merkmalsextraktionseinrichtung zum Bilden von Merkmalvektoren, mit einer Transformationseinrichtung zum Bilden transformierter Merkmalvektoren $[O^t(I)]$ und mit einem nachfolgenden Klassifikator (KL) zugeführt werden, der eine Klassifikation der zugeführten transformierten Merkmalvektoren $[O^t(I)]$ trifft und den ermittelten Klassen entsprechende Ausgangssignale abgibt,
**dadurch gekennzeichnet,**
**dass** die Merkmalextraktionseinrichtung in den einzelnen Kanälen getrennt angeordnete Merkmalextraktionsstufen (ME1 ... MEk) aufweist, die mit ihren Ausgängen an die gemeinsame Transformationseinrichtung (T) angeschlossen sind.

2. Spracherkennungseinrichtung nach Anspruch 1,
**dadurch gekennzeichnet,**
**dass** die Transformationseinrichtung (T) eine lineare Transformationseinrichtung ist.

3. Spracherkennungseinrichtung nach Anspruch 2,
**dadurch gekennzeichnet,**
**dass** die Transformationseinrichtung (T) zum Durchführen einer linearen Diskriminanzanalyse oder einer Karhunen-Loève-Transformation ausgebildet ist.

4. Spracherkennungseinrichtung nach einem der vorhergehenden Ansprüche,
**dadurch gekennzeichnet,**
**dass** die Transformationseinrichtung (T) anhand von Beispieldaten gewählt ist.

5. Spracherkennungseinrichtung nach einem der vorhergehenden Ansprüche,
**dadurch gekennzeichnet,**
**dass** der Klassifikator (KL) unter Bedingungen trainiert ist, die einer vorgesehenen Einsatzsituation entsprechen.

6. Spracherkennungseinrichtung nach einem der vorhergehenden Ansprüche,
**dadurch gekennzeichnet,**
**dass** den Merkmalsextraktionsstufen (ME1 ... MEk) jeweils zugeordnete Störgeräuschreduktionsstufen vorgeschaltet sind.

Fig.1

Fig.2

Fig.3

5